# EUROPÄISCHE PATENTSCHRIFT

(11) **EP 3 078 309 B1**
(45) Veröffentlichungstag und Bekanntmachung des Hinweises auf die Patenterteilung: **08.05.2019**
(21) Anmeldenummer: 16020089.5
(22) Anmeldetag: 21.03.2016
(51) Int. Cl.: A47J 31/60

(54) **ENTKALKUNGSVORRICHTUNG FÜR EINEN GETRÄNKEBEREITER**
DESCALING DEVICE FOR A BEVERAGE PREPARATION MACHINE
DISPOSITIF DE DÉTARTRAGE POUR UN DISPOSITIF DE PRÉPARATION DE BOISSONS

(30) Priorität: 10.04.2015 DE 102015105460
(43) Veröffentlichungstag der Anmeldung: 12.10.2016
(73) Patentinhaber: Miele & Cie. KG, 33332 Gütersloh (DE); BWT AG, 5310 Mondsee (AT)
(72) Erfinder: Tembaak, Jutta, 49492 Westerkappeln (DE); Last, Mario, 33739 Bielefeld (DE); Johann, Jürgen, 69226 Nußloch (DE)

(56) Entgegenhaltungen:
- EP-A2- 2 671 480
- DE-A1-102007 057 351
- DE-A1-102012 104 843
- DE-A1-102013 106 148

## Beschreibung

Die Erfindung betrifft eine Entkalkungsvorrichtung zur Entkalkung eines Strömungsleitungssystems für Fluide, umfassend einen über einen Wassereinlass mit Wasser beaufschlagbaren Vorratsbehälter mit einem darin enthaltenen wasserlöslichen Entkalkungsmittel, dessen Lösung über einen Gemischauslass des Vorratsbehälters abführbar ist, wobei in dem mit Wasser aufgefüllten Vorratsbehälter eine sich ausbildende gesättigte Lösung des ursprünglich festen, pulverförmigen oder pastösen Entkalkungsmittels gegeben ist.

Aus der EP 2 671 480 A1 ist eine Entkalkungsvorrichtung zur Entkalkung eines Strömungsleitungssystems für Fluide, umfassend einen über einen Wassereinlass mit Wasser beaufschlagbaren Vorratsbehälter mit einem darin enthaltenen wasserlöslichen Entkalkungsmittel bekannt. Die Lösung wird hierbei über einen Gemischauslass des Vorratsbehälters abgeführt, wobei in dem mit Wasser aufgefüllten Vorratsbehälter eine sich ausbildende gesättigte Lösung des ursprünglich pulverförmigen oder pastösen Entkalkungsmittels gegeben ist.

In fester Form ist das wasserlösliche Entkalkungsmittel mehrere Jahre haltbar, in gelöster Form verringert sich die Haltbarkeit auf mehrere Monate, da eine Verkeimung nach einer längeren Verweildauer im Wasser auftreten kann. Bei manueller Entkalkung tritt das Problem nicht auf, da für jeden Entkalkungszyklus jeweils eine Portion trockenes Entkalkungsmittel aufgelöst und vollständig aufgebraucht wird. Gelöstes Entkalkungsmittel, hat jedoch in der Regel eine kurze Haltbarkeit hinsichtlich der Stabilität, da die lebensmittelechten Grundstoffe zu einer Flockenausbildung oder Ablagerung der Säurehaltigen Anteile neigen, insbesondere nach einer längeren Verweildauer in gelöster Form. Bei manueller Entkalkung tritt das Problem nicht auf, da das Entkalkungsmittel in der Menge eines einzigen Entkalkungsvorganges in fester Form dem Wasser-Vorratsbehälter zugegeben wird, wo es sich auflöst. Das nun flüssige Entkalkungsmittel wird während des einen Entkalkungsvorganges vollständig aufgebraucht, sodass kein gelöstes Entkalkungsmittel im Leitungssystem oder Vorratsbehälter verbleibt.

Die DE 10 2012 104 843 A1 offenbart eine Entkalkungsvorrichtung zur Entkalkung des Strömungsleitungssystems eines Getränkebereiters, in der das Entkalkungsmittel als Trockensubstanz bevorratet und bedarfsweise aufgelöst wird zur Bereitstellung der in das Leitungssystem einzulassenden Wirklösung. Das Mittel ist mit einem phosphathaltigen Inhibitor versehen, der das Ablösen von Korrosionsschichten von Metallwänden und die Bildung einer Schutzoberfläche bewirkt. Bei einem Kartuschensystem wird Entkalkungsmittel für mehrere Entkalkungsvorgänge in gelöster, also flüssiger Form, in einem Mischbehälter oder Vorratsbehälter vorgehalten, damit bedarfsweise der Entkalkungsvorgang automatisch, also ohne weitere Benutzerhandlungen von der Gerätesteuerung aktiviert und durchgeführt werden können. Das Entkalkungsmittel, das üblicherweise aus einem Säureanteil besteht, wird dabei über einen längeren Zeitraum in aufgelöster Form in der Kartusche oder Mischkammer vorgehalten. Als Säure wird dabei üblicherweise Apfelsäure oder Zitronensäure verwendet, da sie für lebensmittelführende Komponenten besonders gut geeignet und dazu recht preiswert zu beschaffen ist. Beim Verweilen der aufgelösten Säure über mehrere Tage oder Wochen und zusätzlichen Randbedingungen wie z. B. Wärme, besteht die Gefahr, dass sich Schimmelpilze oder sonstige Verkeimungen in der aufgelösten Säure oder im Fluidsystem, in dem die Säure wirken soll, bilde. Ferner sind Verstopfungen möglich bzw. kann nicht mehr zuverlässig sichergestellt werden, dass die notwendige Säurekonzentration, die dem Strömungsleitungssystem zugeführt werden muss, vorhanden ist.

Der Erfindung liegt somit die Aufgabe zu Grunde, eine Entkalkungsvorrichtung für mehrere Entkalkungszyklen zuverlässiger und über einen längeren Zeitraum betriebssicher zu gestalten. Erfindungsgemäß wird unter anderem diese Aufgabe durch eine Entkalkungsvorrichtung mit den Merkmalen des unabhängigen Anspruchs 1, durch eine Kartusche gemäß Anspruch 7 und durch einen Getränkebereiter gemäß Anspruch 9 gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen darin, dass auf einfache Wiese eine recht lange Lebensdauer der Kartusche bereitgestellt werden kann. Ein weiterer Vorteil ist, dass die Funktion der Entkalkungsvorrichtung und aller Komponenten im Strömungsleitungsquerschnitt für einen längeren Zeitpunkt sichergestellt ist, da Verstopfungen und Konzentrationsschwankungen des Säureanteils in der Wirklösung weitestgehend vermieden werden. Dadurch wird dem Benutzer eines verkalkungsgefährdeten Gerätes mit einer automatisch arbeitenden Entkalkungsvorrichtung ein geringer Wartungsaufwand aufgebürdet, da aufgrund der langen Kartuschenlebensdauer der Kartuschenwechsel oder ein Nachfüllen des Entkalkungsmittel selten bzw. in sehr großen zeitlichen Abständen durchgeführt werden muss. Es wird ferner auf einfache Wiese sichergestellt, dass die Funktion der Entkalkungsvorrichtung und aller Komponenten im Strömungsleitungssystem für einen längeren Zeitraum sichergestellt ist, da Verstopfungen oder Konzentrationsschwankungen des Säureanteils in der Wirklösung weitestgehend vermieden werden.

Insgesamt wird unter anderem das Problem damit gelöst, dass Inhibitoren zur Stabilisierung der Säure zugegeben werden. Bei der verwendeten Entkalkungsvorrichtung mit Kartusche besteht der Auslauf aus der Kartusche zum Einbringen des Entkalkungsmittels aus einem sehr kleinen Durchmesser. Bereits kleine Flocken oder Verklumpungen verstopfen diesen Durchmesser, so dass das System nicht mehr funktioniert. Inhibitoren bilden jedoch in der Regel beim Auflösen Flocken oder sogar Schichten.

Insgesamt wird erreicht, dass das aufgelöste Entkalkungsmittel keine Flocken oder Verklumpung bildet, so dass Verstopfungen vermieden werden. Ferner ist sichergestellt, dass die Trockensubstanz gleichmäßig ein Gemisch aus gleichen oder annähernd gleichen Anteilen Säure und Inhibitor ins Fluidsystem entlässt, so dass alle Anteile des Fluidsystems gleichmäßig entkalkt werden und nicht verkeimen.

Dies wird insgesamt dadurch erreicht, dass im Entkalkungsmittel neben der kalklösenden Säure, die bei lebensmittelfzubereitenden Geräten aus natürlichen Grundsubstanzen gewonnen wird, ferner ein Inhibitor eingebracht oder zugesetzt ist, welches sich bei Zugabe des Wassers gemeinsam mit dem Entkalkungsmittel auflöst und die Wirklösung bereitstellt. Der Inhibitor ist dabei ein Mittel aus einer sogenannten unkritischen Substanz, sodass kritisch eingestufte Substanzen nicht in das mit Lebensmitteln in Berührung kommende Leitungen oder Komponenten in Berührung kommen. Hier ist es insgesamt vorteilhaft, dass der Inhibitor bei Auslieferung der Kartusche in fester Form vorliegt und derart konditioniert ist, dass er sich bei Inbetriebnahme durch die Zugabe von Wasser auflöst. Ferner ist die Substanz, aus der der Inhibitor besteht, lebensmitteltauglich und weist annähernd die gleiche Auflösegeschwindigkeit auf, wie die Apfelsäure oder Zitronensäure. Ferner hat die gewählte Substanz die Eigenschaft, dass sie sich rückstandslos auflöst, um die Kapillaren oder Leitungen nicht zu verstopfen, wobei sie sich in der Apfelsäure selbstständig und zumindest nahezu homogen verteilt.

In einer vorteilhaften Ausführung umfasst der Inhibitor eine organische Aminverbindung oder Derivate daraus oder besteht aus organische Aminverbindung oder Derivate daraus. Diese Substanz oder Substanzen sind im Zusammenhang mit der Lebensmittelverarbeitung als unkritisch angesehen und kostengünstig zu beschaffen.

Der Inhibitor ist als Pulver, Granulat in der Trockensubstanz des Entkalkungsmittels, beispielsweise Apfelsäure oder Zitronensäure, im Wesentlichen gleichmäßig verteilt, eingebracht. Die feste Substanz des Entkalkungsmittels ist hierbei in Tablettenform gepresst, sodass mehrere Tabletten die Trockensubstanz in der Kartusche bildet. Somit wird beim Auflösen des Pulvers oder festen Entkalkungsmittels selbständig und nahezu gleichmäßig bis gleichmäßig der Inhibitor in die Wirklösung zugegeben bzw. in dieser verteilt.

In einer insgesamt zweckmäßigen Ausführung weist der Anteil des Inhibitors einen Wert in einem Bereich von 1 % bis 10 %, bezogen auf die ungelöste Trockensubstanz auf. In einer bevorzugten Weiterbildung weist der Anteil des Inhibitors einen Wert in einem Bereich von 3% bis 5 %, bezogen auf die ungelöste Trockensubstanz auf.

In diesen beiden vorgenannten Ausführungen wird beispielhaft eine Rezeptur (Anteil 96 % Säure zu 4 % Inhibitor) angegeben, die ermöglicht, dass der Inhibitor homogen in der Apfelsäuretablette verpresst wird, und dabei berücksichtigt ist, dass die Tablette stabil genug ist, um in die Kartusche, also dem Vorratsbehälter für das Entkalkungsmittel, gefüllt werden zu können und dabei nicht zerfällt. Bei dieser Rezeptur ist weiterhin berücksichtigt, dass sich der Inhibitor zeitgleich mit der Apfelsäure auflöst und sich so mit der Apfelsäure in der flüssigen Form vermischt, dass in der gesamten Kartusche eine homogene Lösung von Apfelsäure und Inhibitor vorliegt. Außerdem liegt der Inhibitor in einer Konzentrationshöhe vor, die sicherstellt, dass bei Zudosierung ins Fluidsystem und Vermischung mit dem Wasser die Konzentration vorliegt, die zur Stabilisierung der Apfelsäure ausreicht. Ferner ist der Inhibitor derart konfiguriert, dass durch den Einfluss der Säure die Löslichkeit des Inhibitors nicht verringert wird. Die Löslichkeit des Inhibitors muss zweckmäßigerweise > 100 g/l sein. Durch die erhöhte Löslichkeit wird der Temperatureinfluss auf die Stabilität der Lösung (Ausflockung bei Temperaturschwankungen) verringert.

Die Erfindung betrifft auch einen Getränkebereiter, wie Kaffeevollautomat oder Teevollautomat, umfassend ein Gehäuse und zumindest ein Strömungsleitungssystem, welches mindestens einen Wasser enthaltenden oder befüllbaren Wasserbehälter oder einen Wasseranschluss, wenigstens eine Pumpe zum Fördern des Wassers durch Leitungsabschnitte und Komponenten des Strömungsleitungssystems, mindestens eine Heizeinrichtung zum Erhitzen des Wassers, mindestens eine Ventilanordnung und wenigstens eine Entnahmeeinrichtung umfasst, und einer Steuereinrichtung zur Steuerung einer im Strömungsleitungssystem eingebundenen Pumpe, einer Heizeinrichtung und Ventilen zur Zubereitung eines ausgewählten Getränkes, wobei die Steuereinrichtung ferner dazu eingerichtet ist, die Pumpe während einer Phase zum Entkalken des Strömungsleitungssystems zu betreiben, umfassend eine Entkalkungsvorrichtung wie vorstehend genannt zur Entkalkung des Strömungsleitungssystems.

Ein Ausführungsbeispiel der Erfindung ist in den Zeichnungen rein schematisch dargestellt und wird nachfolgend näher beschrieben. Es zeigen
- Fig. 1:: einen Getränkebereiter bzw. Kaffeevollautomaten;
- Fig. 2:: eine bevorzugte Ausführung des Strömungsleitungssystems in einer schematischen Ansicht und
- Fig. 3:: eine schematische Detailansicht der Entkalkerkartusche.

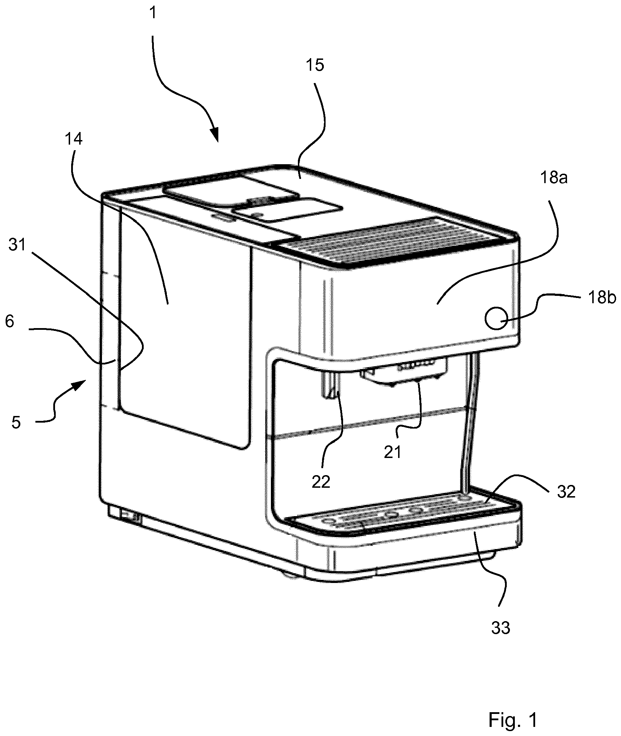

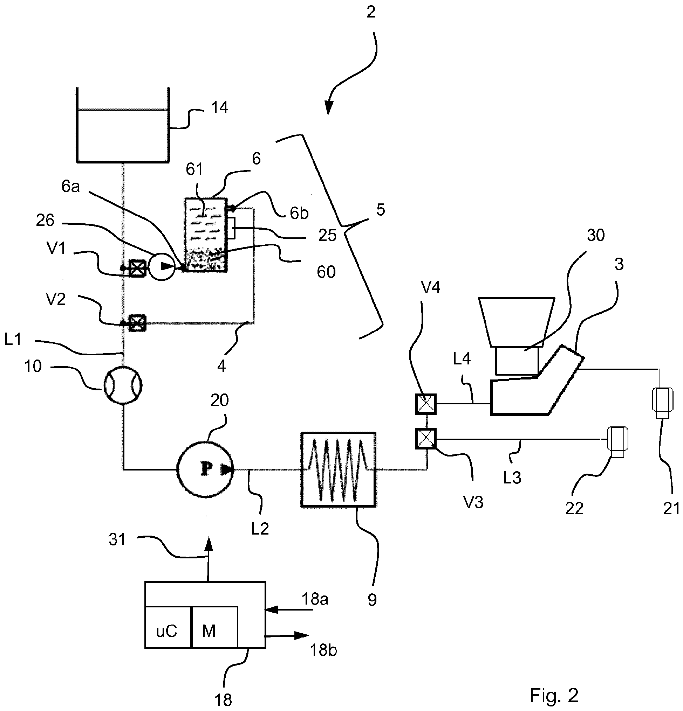

Die Fig.1 zeigt am Beispiel eines als Standgerät ausgebildeten Getränkeautomaten 1 die Möglichkeit, der Unterbringung des Strömungsleitungssystems 2 und Vorratsbehälter 6 zur Bevorratung eines Reinigungsmittels in einem derartigen Getränkeautomaten 1. In der gezeigten Ausführung ist seitlich im Gehäuse 15 des Getränkeautomaten 1 ein Seitenfach 31 vorhanden, dass dem Einsetzen beziehungsweise dem Auswechseln des Vorratsbehälters 6 dient, der im Geräteinneren, hinter diesem Seitenfach 30 angeordnet ist. Im Frontbereich des Getränkeautomaten 1 verfügt dieser über einen Vorbau 31, in dem sichtgeschützt mehrere Entnahmeeinrichtungen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse zur Abgabe von Kaffeegetränken dar. Eine Brüheinheit mit einer Brühkammer 3 im Inneren des Gerätes 1 dient zur Zubereitung des Getränkes, wobei in die Brühkammer 3 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einen hierfür unterhalb des Abtropfbleches 32 vorhandenen Auffangbehälter abzuführen. Das Gerät 1 umfasst gem. Fig. 1 und 2 ferner eine Steuereinrichtung 18, die dazu eingerichtet ist, die einzelnen Funktionsbaugruppen, wie Pumpen 20, Ventile und Heizeinrichtung 9 und Mahlwerk 30, soweit vorhanden, zu steuern, wie es für die Zubereitung des jeweils ausgewählten Getränkes notwendig ist. Die Steuereinrichtung 18 ist in dieser Ausführung ferner dazu eingerichtet, die Ventile V1, V2 des Strömungsleitungssystems 2 so anzusteuern, dass eine vollautomatische Entkalkung des Strömungsleitungssystems 2, insbesondere der mit Kalk oder anderen Ablagerungen beaufschlagten Leitungsabschnitte bzw. Komponenten, wie beispielsweise Flowmeter, Pumpe oder Ventile V3, V4, stattfindet.

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst zwei Teile, wobei ein erster Teil der Zubereitung von Getränken dient und der andere Teil als Bypass 4 von diesem ersten Teil des Strömungsleitungssystems 2 abgezweigt ist. Der Bypass 4 enthält den Vorratsbehälter 6 mit dem darin enthaltenen Entkalkungsmittel 60 oder Säure, welche geeignet ist zum Einsatz in dem Strömungsleitungssystem 2, welches pulverförmig, granulatförmig oder als wasserlöslicher Block ausgebildet ist. Als wasserlöslicher Block kommen Ausführungen als Pille/Kugel, gegebenenfalls mit einem Überzug gegen Verkleben bei Dampfeinwirkung in Frage und welche mittels der Ventile V1 und V2 aktiviert werden können, so dass dieser Leitungsabschnitt 4 eine Entkalkungsvorrichtung 5 bildet, die bei Bedarf an den wasserführenden Teil des Strömungsleitungssystems 2 angeschlossen werden kann. Zur Verbindung des Bypasses 4 mit oder zur Trennung des Bypasses 4 von dem ersten Teil des Strömungsleitungssystems 2 dient auf der Eingangsseite des Bypasses 4 das Mehrwegventil V1, und auf der Ausgangsseite, zum Leitungsabschnitt L1 das Mehrwegventil V2. Zur Erzeugung der Strömung innerhalb des Strömungsleitungssystems 2 sowie des erforderlichen Druckaufbaus dient eine Pumpe 20. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer zugeführt wurde, vorgesehen ist. Zur selektiven Ansteuerung der Entnahmeeinrichtungen 21, 22 dienen die Mehrwegeventile V3 und V4, die den Entnahmeeinrichtungen 21, bzw. der Brühkammer 3 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

Eine Steuereinrichtung 18 mit einem Mikrocontroller uC und einer Speichereinrichtung M dient zur Durchführung einer Getränkezubereitung, wobei hierbei die Aktivierung der Heizeinrichtung, der Ventile V1, V2, V3 und V4 sowie der Pumpe 20, der Brühkammer 3 und bedarfsweise weiteren Komponenten, wie einem Mahlwerk 30 durch entsprechende Signalverbindungen 31 erfolgt. In Fig. 2 ist die Signalverbindung 31 zum Motor der Pumpe 20 skizziert, wobei die Ansteuerung der Pumpe 20 in einer bevorzugten derart erfolgt, dass verschiedene Förderleistungen eingestellt werden können.

Gemäß einer weiteren Ausführung ist in der Bypassleitung 4 eine weitere Pumpe 26 eingesetzt, die zur Förderung von Frischwasser durch den Vorratsbehälter 6 oder Kartusche dient, um Entkalkungsmittel aus dem Behälter in die freigeschalteten Leitungsabschnitte des Strömungsleitungssystems 2 vorgesehen ist. Diese Pumpe 26 wird dabei von der Steuereinrichtung 18 ebenfalls so gesteuert, dass sich vorbestimmte Förderleistungen einstellen, um eine vorbestimmte Säurekonzentration bzw. Entkalkungsmittelkonzentration im Strömungsleitungssystem 2 bzw. in den einzelnen Leitungsabschnitten L1, L2, L3, L4 und den daran angeschlossenen Komponenten 10, 20, 9, V2, V3, 22, oder 10, 20, 9, V2, V4, L4, 3, 21 zu erreichen.

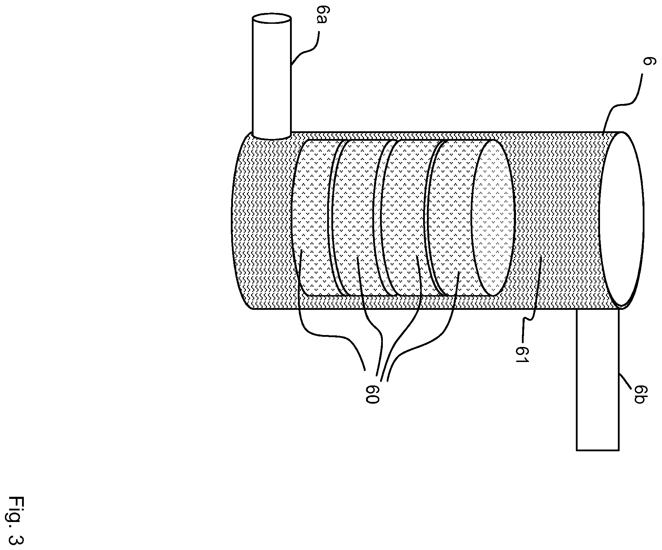

Fig. 3 zeigt schematisch die Kartusche 6 mit dem darin befindlichen, in Tablettenform verpressten Trockensubstanz 60 des Entkalkungsmittels. In den Zwischenräumen und dem Freiraum oberhalb der Trockensubstanz 61 befindet sich die Wirklösung 21, die eine gesättigte Lösung darstellt, solange die Trockensubstanz 60 noch nicht aufgelöst ist. Insgesamt kann die Zusammensetzung wie folgt beschrieben werden. In die Apfelsäure oder Zitronensäure wird ein Inhibitor, z. B. eine organische Aminverbindung, vermischt und zusammen verpresst. Die Tablette setzt sich aus ca. 96 % Säure und 4 % Inhibitor zusammen. Beim Fluten der Kartusche 6 mit Wasser lösen sich die Tabletten homogen auf und die flüssige Wirklösung 61 wird in der Kartusche zur weiteren Verteilung durch den Auslass 6b vorgehalten. Es findet keine Schichtbildung des Inhibitors in der Säure bzw. in der Wirklösung 61 statt und auch keine Flockenbildung. Bei Dosierung der Lösung in das Fluidsystem finden sich ca. 8 g/l Säure und 0,03 g/l Inhibitor wieder, die ausreichen, um den Kalk abzubauen und gleichzeitig die Säure zu stabilisieren.

## Patentansprüche

1. Entkalkungsvorrichtung (5) zur Entkalkung eines Strömungsleitungssystems für Fluide, umfassend einen über einen Wassereinlass mit Wasser beaufschlagbaren Vorratsbehälter (6) mit einem darin enthaltenen wasserlöslichen Entkalkungsmittel (60), dessen Lösung über einen Gemischauslass (6b) des Vorratsbehälters (6) abführbar ist, wobei in dem mit Wasser aufgefüllten Vorratsbehälter (6) eine sich ausbildende gesättigte Lösung (61) des ursprünglich festen, pulverförmigen oder pastösen Entkalkungsmittels (60) gegeben ist, **dadurch gekennzeichnet, dass** im festen, pulverförmigen oder pastösen Entkalkungsmittel (60) ferner ein Inhibitor zur Stabilisierung des Entkalkungsmittels eingebracht ist, welcher sich bei Zugabe des Wassers gemeinsam mit dem Entkalkungsmittel (60) auflöst und die Wirklösung (61) bereitstellt, wobei der Inhibitor als Pulver oder Granulat in der Trockensubstanz im Wesentlichen gleichmäßig verteilt eingebracht ist und annähernd die gleiche Auflösungsgeschwindigkeit wie das Entkalkungsmittel aufweist und ferner für eine rückstandslose Auflösung ausgebildet ist.

2. Entkalkungsvorrichtung nach Anspruch 1, **dadurch gekennzeichnet, dass** der Inhibitor eine organische Aminverbindung oder Derivate daraus umfasst oder der Inhibitor aus einer organische Aminverbindung oder Derivaten daraus besteht.

3. Entkalkungsvorrichtung nach Anspruch 2, **dadurch gekennzeichnet, dass** die Trockensubstanz des Entkalkungsmittels Apfelsäure oder Zitronensäure umfasst.

4. Entkalkungsvorrichtung nach einem der Ansprüche 1 bis 3, **dadurch gekennzeichnet, dass** der Anteil des Inhibitors einen Wert in einem Bereich von 1 % bis 10 %, bezogen auf die ungelöste Trockensubstanz aufweist.

5. Entkalkungsvorrichtung nach Anspruch 4, **dadurch gekennzeichnet, dass** der Anteil des Inhibitors einen Wert in einem Bereich von 3% bis 5 %, bezogen auf die ungelöste Trockensubstanz aufweist.

6. Entkalkungsvorrichtung nach einem der Ansprüche 4 bis 5, **dadurch gekennzeichnet, dass** die Löslichkeit des Inhibitors > 100 g/l beträgt.

7. Kartusche (6), ausgebildet und geeignet zum Einsatz in eine Entkalkungsvorrichtung gemäß einem der Ansprüche 1 bis 6, umfassend ein Gehäuse (6) mit einem Flüssigkeitseinlass (6a) und einem Auslass (6b) für die Entkalkerlösung, und einem in fester oder flüssiger Form eingebrachten Entkalkungsmittel (60), das in verpresster Form als Körper in das Gehäuse eingebracht ist, **dadurch gekennzeichnet, dass** im festen, pulverförmigen oder pastösen Entkalkungsmittel (60) ferner ein Inhibitor zur Stabilisierung des Entkalkungsmittels eingebracht ist, welcher sich bei Zugabe des Wassers gemeinsam mit dem Entkalkungsmittel (60) auflöst und die Wirklösung (61) bereitstellt, wobei der Inhibitor als Pulver oder Granulat in der Trockensubstanz im Wesentlichen gleichmäßig verteilt eingebracht ist und annähernd die gleiche Auflösungsgeschwindigkeit, wie das Entkalkungsmittel aufweist und ferner für eine rückstandslose Auflösung ausgebildet ist.

8. Kartusche (6) nach Anspruch 7, ferner ausgebildet gemäß einem der kennzeichnenden Teile der Ansprüche 2 bis 6.

9. Getränkebereiter (1), wie Kaffeevollautomat oder Teevollautomat, umfassend ein Gehäuse (15) und zumindest ein Strömungsleitungssystem (2), welches mindestens einen Wasser enthaltenden oder befüllbaren Wasserbehälter (14) oder einen Wasseranschluss, wenigstens eine Pumpe (20) zum Fördern des Wassers durch Leitungsabschnitte (L1, L2, L3, L4) und Komponenten des Strömungsleitungssystems (2), mindestens eine Heizeinrichtung (9) zum Erhitzen des Wassers, mindestens eine Ventilanordnung (V3, V4) und wenigstens eine Entnahmeeinrichtung (21, 22) umfasst, und einer Steuereinrichtung (18) zur Steuerung einer im Strömungsleitungssystem (2) eingebundenen Pumpe (20), einer Heizeinrichtung (9) und Ventilen (V3, V4) zur Zubereitung eines ausgewählten Getränkes, wobei die Steuereinrichtung (18) ferner dazu eingerichtet ist, die Pumpe (20) während einer Phase zum Entkalken des Strömungsleitungssystems (2) zu betreiben, **gekennzeichnet durch** eine Entkalkungsvorrichtung (5) gemäß einem der Ansprüche 1 bis 6 zur Entkalkung des Strömungsleitungssystems (2)

## Claims

1. Descaling device (5) for descaling a flow line system for fluids, comprising a storage container (6) which can be supplied with water via a water inlet and which has a water-soluble descaling agent (60) contained therein, the solution of which agent can be discharged through a mixture outlet (6b) of the storage container (6), a developing saturated solution (61) of the initially solid, powdered or pasty descaling agent (60) being introduced into the storage container (6) that is filled with water, **characterised in that** an inhibitor is additionally introduced into the solid, powdered or pasty descaling agent (60) in order to stabilise the descaling agent, which inhibitor dissolves, together with the descaling agent (60), when water is added and provides the active solution (61), the inhibitor being introduced into the dry matter as a powder or granulate material in a substantially uniformly distributed manner and dissolving at approximately the same speed as the descaling agent and also being designed to dissolve without residue.

2. Descaling device according to claim 1, **characterised in that** the inhibitor comprises an organic amine compound or derivatives thereof, or the inhibitor consists of an organic amine compound or derivatives thereof.

3. Descaling device according to claim 2, **characterised in that** the dry matter of the descaling agent comprises malic acid or citric acid.

4. Descaling device according to any of claims 1 to 3, **characterised in that** the proportion of the inhibitor has a value in a range of from 1% to 10% based on the undissolved dry matter.

5. Descaling device according to claim 4, **characterised in that** the proportion of the inhibitor has a value in a range of from 3% to 5% based on the undissolved dry matter.

6. Descaling device according to either claim 4 or claim 5, **characterised in that** the solubility of the inhibitor is >100 g/l.

7. Cartridge (6) that is designed and suitable for use in a descaling device according to any of claims 1 to 6, comprising a housing (6) that has a fluid inlet (6a) and an outlet (6b) for the descaling solution, and a descaling agent (60), introduced in solid or liquid form, that is introduced into the housing in compressed form as a body, **characterised in that** an inhibitor is additionally introduced into the solid, powdered or pasty descaling agent (60) in order to stabilise the descaling agent, which inhibitor dissolves, together with the descaling agent (60), when water is added and provides the active solution (61), the inhibitor being introduced into the dry matter as a powder or granulate material in a substantially uniformly distributed manner and dissolving at approximately the same speed as the descaling device and also being designed to dissolve without residue.

8. Cartridge (6) according to claim 7, further designed according to any of the characterising parts of claims 2 to 6.

9. Beverage preparation machine (1), such as a fully automatic coffee machine or a fully automatic tea machine, comprising a housing (15), at least one flow line system (2) that has at least one water tank (14) which contains or can be filled with water, or a water supply, at least one pump (20) for conveying the water through line portions (L1, L2, L3, L4) and components of the flow line system (2), at least one heating device (9) for heating the water, at least one valve arrangement (V3, V4) and at least one removal device (21, 22), and further comprising a control device (18) for controlling a pump (20) that is integrated in the flow line system (2), a heating device (9) and valves (V3, V4) for preparing a selected beverage, the control device (18) being further designed to operate the pump (20) during a phase for descaling the flow line system (2), **characterised by** a descaling device (5) according to any of claims 1 to 6 for descaling the flow line system (2).

## Revendications

1. Dispositif de détartrage (5) pour le détartrage d'un système de conduite d'écoulement pour des fluides, comprenant un réservoir (6) pouvant être alimenté en eau par une entrée d'eau et contenant un agent de détartrage (60) hydrosoluble, dont la solution peut être évacuée par une sortie de mélange (6b) du réservoir (6), le réservoir (6) rempli d'eau contenant une solution saturée en formation (61) de l'agent de détartrage (60) initialement solide, pulvérulent ou pâteux,
**caractérisé en ce qu'**un inhibiteur pour la stabilisation de l'agent de détartrage est en outre introduit dans l'agent de détartrage (60) solide, pulvérulent ou pâteux, lequel inhibiteur se dissout avec l'agent de détartrage (60) lorsque l'on ajoute de l'eau et fournit la solution active (61), l'inhibiteur étant introduit, selon une répartition sensiblement uniforme, sous forme de poudre ou de granules dans la substance sèche, et présentant approximativement la même vitesse de dissolution que l'agent de détartrage et étant en outre conçu pour une dissolution sans résidu.

2. Dispositif de détartrage selon la revendication 1,
**caractérisé en ce que**
l'inhibiteur comprend un composé d'amine organique ou ses dérivés ou l'inhibiteur est constitué d'un composé d'amine organique ou de ses dérivés.

3. Dispositif de détartrage selon la revendication 2,
**caractérisé en ce que**
la substance sèche de l'agent de détartrage comprend de l'acide malique ou de l'acide citrique.

4. Dispositif de détartrage selon l'une des revendications 1 à 3,
**caractérisé en ce que**
la part de l'inhibiteur présente une valeur comprise dans la plage allant de 1 % à 10 %, par rapport à la substance sèche non dissoute.

5. Dispositif de détartrage selon la revendication 4,
**caractérisé en ce que**
la part de l'inhibiteur présente une valeur comprise dans la plage allant de 3 % à 5 %, par rapport à la substance sèche non dissoute.

6. Dispositif de détartrage selon l'une des revendications 4 et 5,
**caractérisé en ce que**
la solubilité de l'inhibiteur est supérieure à 100 g/l.

7. Cartouche (6), conçue et adaptée pour être utilisée dans un dispositif de détartrage selon l'une des revendications 1 à 6,
comprenant un boîtier (6) avec une entrée de liquide (6a) et une sortie (6b) pour la solution de détartrage, et un agent de détartrage (60) introduit sous forme solide ou liquide, qui est introduit sous forme comprimée en tant que corps dans le boîtier,
**caractérisée en ce qu'**un inhibiteur pour la stabilisation de l'agent de détartrage est en outre introduit dans l'agent de détartrage (60) solide, pulvérulent ou pâteux, lequel inhibiteur se dissout avec l'agent de détartrage (60) lorsque l'on ajoute de l'eau et fournit la solution active (61), l'inhibiteur étant introduit selon une répartition sensiblement uniforme sous forme de poudre ou de granules dans la substance sèche et présentant approximativement la même vitesse de dissolution que l'agent de détartrage et étant en outre conçu pour une dissolution sans résidu.

8. Cartouche (6) selon la revendication 7, formée en outre selon l'une des parties caractérisantes des revendications 2 à 6.

9. Dispositif de préparation de boissons (1), telle qu'une cafetière ou une théière entièrement automatique, comprenant un boîtier (15) et au moins un système de conduite d'écoulement (2), lequel comprend au moins un réservoir (14) contenant de l'eau ou pouvant être rempli d'eau ou une alimentation en eau, au moins une pompe (20) d'acheminement de l'eau par l'intermédiaire de sections de conduite (L1, L2, L3, L4) et de composants du système de conduite d'écoulement (2), au moins un dispositif de chauffage (9) pour le chauffage de l'eau, au moins un ensemble soupapes (V3, V4) et au moins un dispositif de prélèvement (21, 22), et un dispositif de commande (18) pour la commande d'une pompe (20) intégrée dans le système de conduite d'écoulement (2), un dispositif de chauffage (9) et des soupapes (V3, V4) pour la préparation d'une boisson sélectionnée, le dispositif de commande (18) étant conçu en outre pour faire fonctionner la pompe (20) pendant une phase de détartrage du système de conduite d'écoulement (2),
**caractérisé par** un dispositif de détartrage (5) selon l'une des revendications 1 à 6 pour le détartrage du système de conduite d'écoulement (2).
